# EUROPÄISCHE PATENTSCHRIFT

(11) **EP 0 480 314 B1**
(45) Veröffentlichungstag und Bekanntmachung des Hinweises auf die Patenterteilung: **05.06.1996**
(21) Anmeldenummer: 91116908.4
(22) Anmeldetag: 04.10.1991
(51) Int. Cl.: C08L 59/00

(54) **Polyoxymethylen-Formmassen mit verbesserter thermischer Stabilität und verminderter Formaldehydemission**
Polyoxymethylene moulding compositions having an increased thermal stability and a reduced emission of formaldehyde
Matière à mouler à base de polyoxyméthylène, ayant une stabilité thermique accrue et une émission de formaldéhyde réduite

(30) Priorität: 08.10.1990 DE 4031794
(43) Veröffentlichungstag der Anmeldung: 15.04.1992
(73) Patentinhaber: DEGUSSA AG, D-60311 Frankfurt (DE)
(72) Erfinder: Arnoldi, Detlef, Dr., W-6450 Hanau (DE); Nun, Edwin, Dr., W-6486 Brachttal (DE)

(56) Entgegenhaltungen:
- EP-A- 0 192 356
- EP-A- 0 381 943
- EP-A- 0 386 597

## Beschreibung

Gegenstand der Erfindung sind Polyoxymethylen-Formmassen mit verbesserter thermischer Stabilität und verminderter Formaldehydemission, enthaltend im wesentlichen mindestens ein Polyoxymethylen und zusätzlich, jeweils bezogen auf das Gewicht des Polyoxymethylens,
A) 0,1 bis 10 Gewichtsprozent eines Endocopolymerisats, in dem vernetzte Polymerpartikel aus
   a) 95 bis 99,9 Gewichtsprozent mindestens eines monoäthylenisch ungesättigten Monomeren aus der Gruppe der (Meth)acrylsäureester und der Vinylaromaten und
   b) 0,1 bis 5 Gewichtsprozent mindestens eines mehrfach äthylenisch ungesättigten Monomeren in einer kontinuierlichen Phase eines unvernetzten Polymerisats aus mindestens einem Monomeren aus der Gruppe der (Meth)acrylsäureester und der Vinylaromaten dispergiert sind,
B) 0,05 bis 3 Gewichtsprozent mindestens eines vorzugsweise phenolischen Antioxidans,
C) 0 bis 5 Gewichtsprozent Ruß.

Die erfindungsgemäßen Formmassen weisen eine verbesserte thermische Stabilität und eine verminderte Formaldehydemission bei der thermoplastischen Verarbeitung auf, so daß die Neigung zur Bildung von Formbelägen bei der Spritzgußverarbeitung deutlich verringert ist. Außerdem haben aus diesen Formmassen hergestellte Formkörper einen verminderten Oberflächenglanz und eine verbesserte Bedruckbarkeit.

Die den Hauptbestandteil der erfindungsgemäßen Formmassen bildenden Polyoxymethylene können Homopolymere des Formaldehyds oder des Trioxans sein oder Copolymere. Sie können eine lineare Struktur aufweisen, aber auch verzweigt oder vernetzt sein. Sie können einzeln oder als Gemische eingesetzt werden.

Unter Homopolymeren des Formaldehyds oder des Trioxans werden dabei solche Polymere verstanden, deren halbacetalische Hydroxylendgruppen chemisch, beispielsweise durch Veresterung oder Veretherung, gegen Abbau stabilisiert sind. Unter Copolymeren werden z.B. Copolymere aus Trioxan und mindestens einer mit Trioxan copolymerisierbaren Verbindung verstanden.

Solche mit Trioxan copolymerisierbare Verbindungen sind beispielsweise cyclische Ether mit 3 bis 5, vorzugsweise 3 Ringgliedern, von Trioxan verschiedene cyclische Acetale, insbesondere Formale, mit 5 bis 11, vorzugsweise 5 bis 8 Ringgliedern, und lineare Polyacetale, insbesondere Polyformale. Die genannten Cokomponenten werden beispielsweise jeweils in Mengen von 0,01 bis 20, vorzugsweise 0,1 bis 10, insbesondere 1 bis 5 Gewichtsprozent, eingesetzt.

Als Comonomere sind insbesondere Verbindungen der Formel

CH₂-(CHR)ₓ-[O-(CH₂)_{z}]_{y}-O (I)

geeignet, in der R ein Wasserstoffatom, einen Alkylrest mit 1 bis 6, vorzugsweise 1, 2 oder 3 Kohlenstoffatomen, der mit 1, 2 oder 3 Halogenatomen, vorzugsweise Chloratomen, substituiert sein kann, einen Alkoxymethylrest mit 2 bis 6, vorzugsweise 2, 3 oder 4 Kohlenstoffatomen, einen Phenylrest oder einen Phenoxymethylrest bedeutet, x eine ganze Zahl von 1 bis 3, wobei y gleich Null ist, y eine ganze Zahl von 1 bis 3, wobei x gleich Null und z gleich 2 ist, und z eine ganze Zahl von 3 bis 6, vorzugsweise 3 oder 4, darstellt, wobei x gleich Null und y gleich 1 ist.

Als cyclische Ether eignen sich vor allem Epoxide, z.B. Ethylenoxid, Styroloxid, Propylenoxid oder Epichlorhydrin, sowie Glycidylether von ein- oder mehrwertigen Alkoholen oder Phenolen.

Als cyclische Acetale eignen sich vor allem cyclische Formale von aliphatischen oder cycloaliphatischen α,w-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z.B.
Glykolformal (1,3-Dioxolan),
Propandiolformal (1,3-Dioxan),
Butandiolformal (1,3-Dioxepan) und
Diglykolformal (1,3,6-Trioxocan), sowie
4-Chlormethyl-1,3-dioxolan,
Hexandiolformal (1,3-Dioxonan) und
Butendiolformal (1,3-Dioxacyclohepten-5).

Geeignet sind aber auch, insbesondere für die Herstellung von Terpolymeren des Trioxans, Diformale, z.B. Diglycerindiformal.

Als lineare Polyacetale eignen sich sowohl Homo- oder Copolymere der vorstehend definierten cyclischen Acetale als auch lineare Kondensate aus aliphatischen oder cycloaliphatischen α,w-Diolen mit aliphatischen Aldehyden oder Thioaldehyden, vorzugsweise Formaldehyd. Insbesondere werden Homopolymere cyclischer Formale von aliphatischen α,w-Diolen mit 2 bis 8, vorzugsweise 2, 3 oder 4 Kohlenstoffatomen verwendet, z.B. Poly-(1,3-dioxolan), Poly-(1,3-dioxan) und Poly-(1,3-dioxepan).

Die Werte für die Viskositätszahl der erfindungsgemäß eingesetzten Polyoxymethylene (gemessen an einer Lösung des Polymeren in Hexafluorisopropanol, das mit methanolischer Natronlauge auf pH 8 bis 9 eingestellt ist, bei 25°C in einer Konzentration von 0,3 g/100 ml) sollen im allgemeinen mindestens 160 (ml/g) betragen. Die Kristallitschmelzpunkte der Polyoxymethylene liegen im Bereich von 140 bis 180^{o}C, vorzugsweise 150 bis 170°C, ihre Dichten betragen 1,38 bis 1,45 g x ml⁻¹, vorzugsweise 1,40 bis 1,43 g x ml⁻¹ (gemessen nach DIN 53 479).

Die erfindungsgemäß verwendeten, vorzugsweise binären oder ternären Trioxan-Copolymeren werden in bekannter Weise durch Polymerisieren der Monomeren in Gegenwart kationisch wirksamer Katalysatoren bei Temperaturen zwischen 0 und 150^{o}C, vorzugsweise zwischen 70 und 140^{o}C, hergestellt (vgl. z.B. DE-AS 14 20 283). Als Katalysatoren werden hierbei beispielsweise Lewissäuren, wie Bortrifluorid oder Antimonpentafluorid, und Komplexverbindungen von solchen Lewissäuren, vorzugsweise Etherate, z.B. Bortrifluorid-diethyl-etherat oder Bortrifluorid-di-tert.-butyletherat, verwendet. Ferner sind geeignet Protonensäuren, z.B. Perchlorsäure, sowie salzartige Verbindungen, z.B. Triphenylmethylhexafluorophosphat oder Triethyloxoniumtetrafluoroborat, Acetylperchlorat oder Ester der Perchlorsäure, z.B. Methoxymethylperchlorat oder tert.-Butylperchlorat. Zur Regelung des Molekulargewichts können alle Substanzen verwendet werden, von denen bekannt ist, daß sie bei der Polymerisation von Trioxan als Kettenüberträger wirken. Die Polymerisation kann in Masse, Suspension oder Lösung erfolgen. Zur Entfernung instabiler Anteile können die Copolymeren einem thermischen oder hydrolytischen kontrollierten, partiellen Abbau bis zu primären Alkoholendgruppen unterworfen werden (vgl. z.B. DE-ASen 14 45 273 und 14 45 294).
Die erfindungsgemäß verwendeten Homopolymeren des Formaldehyds oder des Trioxans werden ebenfalls in bekannter Weise durch katalytisches Polymerisieren des Monomeren hergestellt (vgl. z.B. DE-ASen 10 37 705 und 11 37 215).

Die in den erfindungsgemäßen Formmassen in einer Menge von 0,1 bis 10 Gewichtsprozent, bezogen auf das Gewicht des Polyoxymethylens, enthaltenen Endocopolymerisate A) bestehen aus vernetzten kugelförmigen Polymerpartikeln, die in einer kontinuierlichen Phase eines unvernetzten Polymerisats dispergiert sind. Die vernetzten Polymerpartikel ihrerseits entstehen durch Copolymerisation von a) 95 bis 99,9 Gewichtsprozent mindestens eines monoäthylenisch ungesättigten Monomeren aus der Gruppe der (Meth)acrylsäureester und der Vinylaromaten mit b) 0,1 bis 5 Gewichtsprozent mindestens eines mehrfach äthylenisch ungesättigten Monomeren.

Besonders geeignete monoäthylenisch ungesättigte Monomere sind die Ester der Methacrylsäure und der Acrylsäure mit einem gesättigten aliphatischen oder cycloaliphatischen Alkohol mit 1 bis 8 C-Atomen, wie Methylacrylat, Methylmethacrylat, Ethylacrylat, Ethylmethacrylat, Butylacrylat, Butylmethacrylat, tert. Butylmethacrylat, 2,2-Dimethylpropylacrylat (Neopentylacrylat), 2,2-Dimethylpropylmethacrylat (Neopentylmethacrylat), Cyclohexylacrylat oder Cyclohexylmethacrylat; mit einseitig verätherten Diolen der allgemeinen Formel

HO - [(CH₂)ₓ-O-]_{y}(CH₂)_{z} -H (II),

in der x gleich 2 bis 20, vorzugsweise 2 bis 12, y gleich 1 bis 10, vorzugsweise 1 bis 4, und z gleich 1 bis 20, vorzugsweise 1 bis 4, ist, wie
Ethylenglykolmonomethyletheracrylat,
Ethylenglykolmonomethylethermethacrylat,
Triethylenglykolmonomethyletheracrylat und
Triethylenglykolmonomethylethermethacrylat; mit einem Phenol mit 6 bis 14 C-Atomen,
wie Phenylacrylat, Phenylmethacrylat,
1-Naphthylacrylat, 2-Naphthylacrylat,
1-Naphthylmethacrylat, 2-Naphthylmethacrylat,
1-Anthracenylacrylat und 1-Anthracenylmethacrylat; mit substituierten Phenolen, wie o-Kresylacrylat,
m-Kresylacrylat, p-Kresylacrylat, o-Kresylmethacrylat,
m-Kresylmethacrylat, p-Kresylmethacrylat,
4-Methoxyphenylacrylat (Hydrochinonmonomethylether-acrylat) und
2-Methoxyphenylacrylat (Brenzcatechinmethacrylat);
oder mit einem aromatisch-aliphatischen Alkohol mit 7 bis 22 C-Atomen, wie Benzylacrylat, Benzylmethacrylat,
3-Phenylpropylacrylat und 3-Phenylpropylmethacrylat;
und die Vinylaromaten, wie Styrol oder substituierte Styrole und Vinylnaphthaline oder substituierte Vinylnaphthaline.

Besonders geeignete mehrfach äthylenisch ungesättigte Monomere sind Di(meth)acrylsäureester von Glykolen mit etwa 2 bis 10 C-Atomen, wie Ethylenglykoldimethacrylat, Tetraethylenglykoldimethacrylat und Ethylenglykoldiacrylat; Divinylverbindungen, wie Divinylbenzol oder Divinylether der genannten Glykole, Di- und Triallylverbindungen, wie Diallylphthalat oder Triallylcyanurat. Daneben können aber auch andere mindestens zwei äthylenische Doppelbindungen aufweisende Monomere eingesetzt werden, wie Divinylpyridin, Divinylnaphthalin, die Divinyltoluole, Trivinylbenzole, Trivinylnaphthaline, Divinylcarbonat, N,N'Divinylethylenharnstoff oder Allylester mehrwertiger Carbonsäuren, z.B. Diallylsuccinat, Diallylcarbonat, Diallyltartrat oder Triallylcitrat, oder Triallylphosphat.

Die Herstellung derartiger Endocopolymerisate A) ist beispielsweise in der DE-PS 21 46 628 beschrieben. Sie erfolgt in der Weise, daß das als kontinuierliche Phase eines unvernetzten Polymerisats dienende Polymere in dem Gemisch aus dem monoäthylenisch ungesättigten Monomeren und dem mehrfach äthylenisch ungesättigten Monomeren aufgelöst und dann die radikalische Polymerisation des letzteren Gemisches ausgelöst wird. Dabei tritt eine Phasentrennung ein und es entstehen die kugelförmigen vernetzten Polymerpartikel als Dispersion in dem urspünglich eingesetzten löslichen Polymerisat. Die Endocopolymerisation kann als Emulsionspolymerisation oder als Polymerisation in der Masse vorgenommen werden. Besonders vorteilhaft ist jedoch das Verfahren der Suspensionspolymerisation, weil dabei gleich Endocopolymerisate mit einem Teilchendurchmesser zwischen 0,1 und 15 µm entstehen, die sich für den Einsatz in den erfindungsgemäßen Formmassen besonders gut eignen.

Das mehrfach äthylenisch ungesättigte Monomere wird vorzugsweise in einer Menge zwischen 0,3 und 2 Gewichtsprozent, bezogen auf das Gewicht des herzustellenden Endocopolymerisats eingesetzt. Darüber hinaus enthält zweckmäßigerweise das Endocopolymerisat A) 50 bis 85, vorzugsweise 65 bis 85 Gewichtsprozent an vernetzten Polymerpartikeln und 15 bis 50, vorzugsweise 15 bis 35 Gewichtsprozent an unvernetztem Polymerisat.

Zum Schutz gegen die schädliche Einwirkung von Luftsauerstoff, insbesondere bei erhöhten Temperaturen, müssen die erfindungsgemäßen Formmassen ferner als Komponente B) 0,05 bis 3 Gewichtsprozent bezogen auf das Gewicht des Polyoxymethylens, mindestens eines Antioxidans enthalten, besonders geeignet sind phenolische Antioxidantien, insbesondere solche mit 2 bis 6 Hydroxyphenylresten im Molekül, wie sie z.B. in der DE-PS 25 40 207 beschrieben sind.

Sie können ferner als Komponente C) bis zu 5 Gewichtsprozent Ruß enthalten. Der Ruß kann als Pulver, in geperlter Form oder als Konzentrat, vorzugsweise in einem Polyoxymethylen als Matrix, beigemischt werden.

Die Alterung von Polyoxymethylen-Formmassen wird durch Licht, insbesondere durch die zur Erde gelangenden UV-Anteile des Sonnenlichts beschleunigt. Als Gegenmaßnahme muß das Eindringen des Lichts verringert, oder besser noch, verhindert werden. Ruße wirken, abhängig von Konzentration und BET-Oberfläche, oft zusammen mit organischen UV-Absorbern als UV-Stabilisatoren für Polyoxymethylene.

An der Oberfläche der Rußpartikel befinden sich noch verschiedene funktionelle, meist sauerstoffhaltige Gruppen, beispielsweise lassen sich Carbonylgruppen nachweisen. Diese Gruppen sind für verschiedene pH-Werte der Ruße, bestimmt nach DIN ISO 787/11, verantwortlich. Um Polyoxymethylene nicht durch säurekatalysierte Acetalspaltungen zu schädigen, sollten nur Ruße eingesetzt werden, deren pH-Wert ≧ 8 beträgt. Die BET-Oberfläche der Ruße ist hiervon unabhängig und kann frei für den jeweiligen Verwendungszweck der erfindungsgemäßen Formmassen gewählt werden.

Schließlich können die erfindungsgemäßen Formmassen noch bis zu 3 Gewichtsprozent, bezogen auf das Gewicht des Polyoxymethylens, an weiteren in Polyoxymethylen-Formmassen üblichen Zusätzen enthalten. Beispiele für derartige sonstige Zusätze sind an sich bekannte Wärmestabilisatoren, z.B. Kondensationsprodukte von Carbonsäureamiden, wie Oxalsäure-, Malonsäure-, Isophthalsäure-, Terephthalsäurediamid und Trimesinsäuretriamid, schwerflüchtige s-Triazinderivate wie Melam, Melem und Melon, Kondensationsprodukte aus Melamin und Formaldehyd, und UV-Absorber und Lichtschutzmittel, z.B. 2-(2'-Hydroxyphenyl)-benzotriazole, 2,4-Bis-(2'-hydroxyphenyl)-6-alkyl-s-triazine, 4-Hydroxybenzophenone, 1,3-Bis-(2'-hydroxybenzoyl)-benzol-Derivate und Oxalsäurediamide, wie Oxalsäuredianilid.

Die erfindungsgemäßen Formmassen werden durch Mischen der zweckmäßigerweise überwiegend in Pulver- oder Granulatform vorliegenden Komponenten und anschließendes Homogenisieren hergestellt. Einzelne Komponenten können jedoch auch in Lösung oder in dispergierter Form zugesetzt werden, entweder in der Misch- oder erst in der Homogenisierungsvorrichtung.

Das Mischen erfolgt üblicherweise bei Raumtemperatur, vorzugsweise bei einer Temperatur von 15 bis 30°C, und das Homogenisieren erfolgt in beliebigen heizbaren Mischwerken, z.B. Walzen, Kalandern, Knetern oder Extrudern, bei einer Temperatur oberhalb des Kristallitschmelzpunktes des Polyoxymethylens, d.h. bei einer Temperatur von 150 bis 260^{o}C, vorzugsweise 170 bis 220^{o}C.

Die nachfolgenden Beispiele und Vergleichsversuche sollen die Erfindung veranschaulichen, wobei die vorteilhafte Wirkung der eingesetzten Endocopolymerisate in Standardpolyoxymethylenen gezeigt werden soll.

Die in den Beispielen angegebenen Prozentzahlen sind Gewichtsprozente, in der Analytik jeweils bezogen auf die Gesamtformmasse, ansonsten auf das Polyoxymethylen. Die thermischen Stabilitäten unter Stickstoff (N₂) und Luft werden als Gewichtsverlust (GV) nach 2 Stunden bei 220^{o}C ermittelt. Der MFI wird bei 190^{o}C und 2,16 kp Belastung bestimmt.

Die angegebenen Formaldehydkonzentrationen werden wie folgt ermittelt: Unmittelbar nach dem Spritzgießen mit einer Massetemperatur von 193^{o}C und einer Werkzeugtemperatur von 90^{o}C wird ein Schulterstab noch heiß dem Werkzeug entnommen und in ein abgeschlossenes 10 l-Gefäß überführt. Nach 2 Minuten wird die Formaldehydkonzentration im Luftraum bestimmt. Der Oberflächenglanz wird nach DIN 67 530 an Rundscheiben von 60 mm Durchmesser und 2 mm Dicke bestimmt und in Skalenteilen (Skt) angegeben. Die Rundscheiben werden ebenfalls bei einer Massetemperatur von 193^{o}C und einer Werkzeugtemperatur von 90^{o}C mit einem Druck von 50 bar gespritzt.

### Eingesetzte Materialien:

A) Polyoxymethylene (POM):
   - POM 1:: Copolymeres aus Trioxan und
   1,3-Dioxepan mit ca. 2,0 % Comonomeranteil, bereits stabilisiert mit
   0,3 % Triethylenglykol-bis-(3-tert. butyl-5-methyl-4-hydroxyphenyl)-propionat als Antioxidans.
   MFI: 8 bis 10 g/10 min.
   - POM 2:: Copolymeres aus Trioxan und 1,3-Dioxepan mit ca. 2,55 % Comonomeranteil, bereits stabilisiert mit
   0,3 % Triethylenglykol-bis-(3-tert. butyl-5-methyl-4-hydroxyphenyl)-propionat als Antioxidans.
   MFI: 8 bis 10 g/10 min.
B) Endocopolymerisate (ENDO):
   - ENDO 1:: 73,8 % vernetzte Polymerpartikel aus 62,17 % Styrol, 37,01 % n-Butylacrylat und 0,82 % Tetraethylenglykoldimethacrylat, dispergiert in 26,14 % eines unvernetzten hochmolekularen Polymerisats aus Methylmethacrylat.
   - ENDO 2:: 75,15 % vernetzte Polymerpartikel aus 60,84 % Styrol, 38,36 % n-Butylacrylat und 0,8 % Tetraethylenglykoldimethacrylat, dispergiert in 24,85 % eines unvernetzten Copolymerisats aus 60 % Methylmethacrylat und 40 % n-Butylmethacrylat.
   - ENDO 3:: 73,8 % vernetzte Polymerpartikel aus 62,17 % Styrol, 37,01 % n-Butylacrylat und 0,82 % Tetraethylenglykoldimethacrylat, dispergiert in 26,14 % eines 1 : 1 Gemisches aus einem unvernetzten hochmolekularen Polymerisats aus Methylmethacrylat und einem unvernetzten Copolymerisat aus 78 % Methylmethacrylat und 22 % n-Butylacrylat.
C) Ruß:
   Furnace-Ruß mit einer BET-Oberfläche von ca. 300 m²/g als 12,5 %iges Konzentrat in Polyoxymethylen als Matrix, granuliert, mit einem pH-Wert von 10 ± 1,5.
D) Sonstiger Zusatzstoff:
   Feinteiliges, vernetztes Melamin-Formaldehyd-Kondensat (MFK).

### Vergleichsversuch a und Beispiele 1 bis 3:

Die Komponenten POM2, ENDO1, ENDO2, MFK und Ruß wurden in den in Tabelle 1 angegebenen Gewichtsverhältnissen, jeweils bezogen auf POM2, vermischt, in einem Zweiwellenextruder vom Typ ZDS-K28 aufgeschmolzen und homogenisiert und die homogenisierte Mischung wurde erneut granuliert. Die thermischen Stabilitäten wurden am Granulat bestimmt, der Oberflächenglanz an den oben beschriebenen Prüfkörpern. Die Ergebnisse sind in Tabelle 1 zusammengestellt:

**Tabelle 1**

| Vergleichsversuch bzw. Beispiel | ENDO1 (%) | ENDO2 (%) | MFK (%) | Ruß (%) | GV-N₂ (%) | GV-Luft (%) | Glanz (Skt) |
|---|---|---|---|---|---|---|---|
| a | 0 | 0 | 0,15 | 0,2 | 0,51 | 1,70 | 83,7 |
| 1 | 1 | 0 | 0,15 | 0,2 | 0,37 | 1,35 | 71,7 |
| 2 | 6 | 0 | 0,15 | 0,2 | 0,23 | 1,10 | 36,2 |
| 3 | 0 | 2 | 0,15 | 0,2 | 0,19 | 1,04 | 35,7 |

### Vergleichsversuch b und Beispiele 4 bis 7:

Die Komponenten POM2, ENDO2, ENDO3, MFK und Ruß wurden in den in Tabelle 2 angegebenen Gewichtsverhältnissen, jeweils bezogen auf POM2, vermischt, in einem Zweiwellenextruder homogenisiert und die homogenisierte Mischung erneut granuliert. Die Prüfungen wurden wie oben vorgenommen. Die Ergebnisse sind in Tabelle 2 zusammengestellt:

**Tabelle 2**

| Vergleichsversuch bzw. Beispiel | ENDO2 (%) | ENDO3 (%) | MFK (%) | Ruß (%) | GV-N₂ (%) | GV-Luft (%) | Glanz (Skt) |
|---|---|---|---|---|---|---|---|
| b | 0 | 0 | 0,15 | 0,2 | 0,64 | 2,02 | 77,6 |
| 4 | 0,5 | 0 | 0,15 | 0,2 | 0,48 | 1,31 | 71,2 |
| 5 | 4 | 0 | 0,15 | 0,2 | 0,38 | 1,01 | 41,9 |
| 6 | 0 | 1 | 0,15 | 0,2 | 0,29 | 0,95 | 69,6 |
| 7 | 0 | 4 | 0,15 | 0,2 | 0,17 | 0,70 | 32,6 |

### Vergleichsversuch c und Beispiel 8:

Die Komponenten POM2, ENDO3, und MFK wurden in den in Tabelle 3 angegebenen Gewichtsverhältnissen, jeweils bezogen auf POM2, vermischt, in einem Zweiwellenextruder homogenisiert und die homogenisierte Mischung erneut granuliert. Die Prüfungen wurden wie oben vorgenommen. Die Ergebnisse sind in Tabelle 3 zusammengestellt:

**Tabelle 3**

| Vergleichsversuch bzw. Beispiel | ENDO3 (%) | MFK (%) | GV-N₂ (%) | GV-Luft (%) | Glanz (Skt) |
|---|---|---|---|---|---|
| c | 0 | 0,15 | 0,30 | 1,09 | 80,3 |
| 8 | 2 | 0,15 | 0,23 | 0,94 | 39,6 |

### Vergleichsversuch d und Beispiel 9:

Die Komponenten POM2, ENDO3, RuB und MFK wurden in den in Tabelle 4 angegebenen Gewichtsverhältnissen, jeweils bezogen auf POM2, vermischt, in einem Zweiwellenextruder homogenisiert und die homogenisierte Mischung erneut granuliert. Die Prüfungen wurden wie oben vorgenommen. Die Ergebnisse sind in Tabelle 4 zusammengestellt:

**Tabelle 4**

| Vergleichsversuch bzw. Beispiel | ENDO3 (%) | MFK (%) | Ruß (%) | GV-Luft (%) | Glanz (Skt) |
|---|---|---|---|---|---|
| d | 0 | 0,15 | 2 | >5 | >83 |
| 9 | 6 | 0,15 | 2 | 1,95 | 26,1 |

### Vergleichsversuch e und Beispiele 10 bis 12:

Die Komponenten POM2, ENDO2, MFK und Ruß wurden in den in Tabelle 5 angegebenen Gewichtsverhältnissen, jeweils bezogen auf POM2, vermischt, in einem Zweiwellenextruder homogenisiert und die homogenisierte Mischung erneut granuliert. Die Formaldehydemission wurde wie oben beschrieben bestimmt. Die Ergebnisse sind in Tabelle 5 zusammengestellt:

**Tabelle 5**

| Vergleichsversuch bzw. Beispiel | ENDO2 (%) | MFK (%) | Ruß (%) | Formaldehydemission (ppm) |
|---|---|---|---|---|
| e | 0 | 0,15 | 0,2 | 21,1 |
| 10 | 1 | 0,15 | 0,2 | 14,3 |
| 11 | 2 | 0,15 | 0,2 | 10,4 |
| 12 | 4 | 0,15 | 0,2 | 8,3 |

### Vergleichsversuch f und Beispiele 13 bis 14:

Die Komponenten POM1, ENDO3, MFK und Ruß wurden in den in Tabelle 6 angegebenen Gewichtsverhältnissen, jeweils bezogen auf POM1, vermischt, in einem Zweiwellenextruder homogenisiert und die homogenisierte Mischung erneut granuliert. Die Prüfungen wurden wie oben vorgenommen. Die Ergebnisse sind in Tabelle 6 zusammengetellt:

**Tabelle 6**

| Vergleichsversuch bzw. Beispiel | ENDO3 (%) | MFK (%) | Ruß (%) | GV-N₂ (%) | GV-Luft (%) |
|---|---|---|---|---|---|
| f | 0 | 0,15 | 0,2 | 0,74 | 4,58 |
| 13 | 4 | 0 | 0,2 | 0,49 | 3,26 |
| 14 | 4 | 0,15 | 0,2 | 0,50 | 2,21 |

### Vergleichsversuch g und Beispiele 15 bis 16:

Die Komponenten POM2, ENDO3, MFK und Ruß wurden in den in Tabelle 7 angegebenen Gewichtsverhältnissen, jeweils bezogen auf POM2, vermischt, in einem Zweiwellenextruder homogenisiert und die homogenisierte Mischung erneut granuliert. Die Prüfungen wurden wie oben vorgenomen. Die Ergebnisse sind in Tabelle 7 zusammengestellt:

**Tabelle 7**

| Vergleichsversuch bzw. Beispiel | ENDO3 (%) | MFK (%) | Ruß (%) | GV-N₂ (%) | GV-Luft (%) |
|---|---|---|---|---|---|
| g | 0 | 0,15 | 0,2 | 0,75 | 4,60 |
| 15 | 4 | 0 | 0,2 | 0,26 | 1,56 |
| 16 | 4 | 0,15 | 0,2 | 0,28 | 1,37 |

### Vergleichsversuche h und i und Beispiel 17:

Die Komponenten POM2, ENDO3 und MFK wurden in den in Tabelle 8 angegebenen Gewichtsverhältnissen, jeweils bezogen auf POM2, vermischt, in einem Zweiwellenextruder homogenisiert und die homogenisierte Mischung erneut granuliert. Die Prüfungen wurden wie oben vorgenommen. Die Ergebnisse sind in Tabelle 8 zusammengestellt:

**Tabelle 8**

| Vergleichsversuch bzw. Beispiel | ENDO3 (%) | MFK (%) | GV-N₂ (%) | GV-Luft (%) |
|---|---|---|---|---|
| h | 0 | 0 | 0,31 | 2,59 |
| i | 0 | 0,15 | 0,28 | 2,15 |
| 17 | 4 | 0 | 0,14 | 0,98 |

## Patentansprüche

1. Polyoxymethylen-Formmassen mit verbesserter thermischer Stabilität und verminderter Formaldehydemission, bestehend im wesentlichen aus mindestens einem Polyoxymethylen und zusätzlich aus, jeweils bezogen auf das Gewicht des Polyoxymethylens,
A) 0,1 bis 10 Gew.-% eines Endocopolymerisats, in dem vernetzte Polymerpartikel aus
a) 95 bis 99,9 Gew.-% mindestens eines monoethylenisch ungesättigten Monomeren aus der Gruppe der (Meth)acrylsäureester und der Vinylaromaten und
b) 0,1 bis 5 Gew.-% mindestens eines mehrfach ethylenisch ungesättigten Monomeren
in einer kontinuierlichen Phase eines unvernetzten Polymerisats aus mindestens einem Monomeren aus der Gruppe der (Meth)acrylsäureester und der Vinylaromaten dispergiert sind,
B) 0,05 bis 3 Gew.-% mindestens eines phenolischen Antioxidans,
C) 0 bis 5 Gew.-% Ruß und
D) 0 bis 3 Gew.-% an weiteren in Polyoxymethylen-Formmassen üblichen Zusätzen,
wobei das Endocopolymerisat A) aus 65 bis 85 Gew.-% an vernetzten Polymerpartikeln und 15 bis 35 Gew.-% an unvernetztem Polymerisat besteht.

2. Polyoxymethylen-Formmassen nach Anspruch 1,
**dadurch gekennzeichnet,**
daß der mittlere Teilchendurchmesser des Endocopolymerisats A) 0,1 bis 15 µm beträgt.

## Claims

1. Polyoxymethylene moulding materials having improved thermal stability and decreased emission of formaldehyde, consisting substantially of at least one polyoxymethylene and additionally, in each case referred to the weight of the polyoxymethylene, of
A) from 0.1 to 10 wt.% of an endocopolymer, wherein cross-linked polymer particles composed of
a) from 95 to 99.9 wt.% of at least one monoethylenically unsaturated monomer from the group comprising the (meth)acrylate esters and the vinyl aromatics and
b) from 0.1 to 5 wt.% of at least one multiply ethylenically unsaturated monomer
are dispersed in a continuous phase of an uncross-linked polymer composed of at least one monomer from the group comprising the (meth)acrylate esters and the vinyl aromatics,
B) from 0.05 to 3 wt.% of at least one phenolic antioxidant,
C) from 0 to 5 wt.% of carbon black and
D) from 0 to 3 wt.% of other additives conventional in polyoxymethylene moulding materials,
wherein the endocopolymer A) consists of from 65 to 85 wt.% of cross-linked polymer particles and from 15 to 35 wt.% of uncross-linked polymer.

2. Polyoxymethylene moulding material according to claim 1, characterised in that the average particle diameter of the endocopolymer A) is from 0.1 to 15 µm.

## Revendications

1. Matières à mouler en polyoxyméthylène ayant une stabilité thermique améliorée et une émission de formaldéhyde réduite, qui consistent essentiellement en au moins un polyoxyméthylène et en supplément en, à chaque fois rapporté au poids de polyoxyméthylène,
A) de 0,1 à 10 % en poids d'un endocopolymérisat dans lequel des particules de polymère réticulées à base de,
a) 95 à 99,9 % en poids d'au moins un monomère non saturé monoéthyléniquement choisi dans le groupe des esters d'acide (meth)acrylique et des vinylaromatiques et,
b) de 0,1 à 5 % en poids d'au moins un monomère non saturé plusieurs fois éthyléniquement,
sont dispersées dans une phase continue d'un polymérisat non réticulé à base d'au moins un monomère choisi dans le groupe des esters d'acide (meth)acrylique et des vinylaromatiques,
B) de 0,05 à 3 % en poids d'au moins un antioxydant phénolique,
C) de 0 à 5 % en poids de noir de carbone
D) 0 à 3 % en poids d'additifs supplémentaires, usuels dans les matières à mouler à base de polyoxyméthylène,
le endocopolymérisat A) étant formé de 65 à 85 % en poids en particules réticulées de polymère et de 15 à 35 % en poids de polymérisat non réticulé.

2. Matières à mouler à base de polyoxyméthylène selon la revendication 1, caractérisées en ce que le diamètre moyen des particules de endocopolymérisat A s'élève de 0,1 à 15 µm.
